Europäisches Patentamt

European Patent Office

Office européen des brevets

(11) Veröffentlichungsnummer: **0 294 645 B1**

(19)

(12) **EUROPÄISCHE PATENTSCHRIFT**

(45) Veröffentlichungstag der Patentschrift: **15.01.92**

(51) Int. Cl.⁵: **G01N 1/28**, G01N 33/48

(21) Anmeldenummer: **88108305.9**

(22) Anmeldetag: **25.05.88**

(54) **Vorrichtung zur Harnuntersuchung.**

(30) Priorität: **10.06.87 DE 3719302**

(43) Veröffentlichungstag der Anmeldung:
**14.12.88 Patentblatt 88/50**

(45) Bekanntmachung des Hinweises auf die
Patenterteilung:
**15.01.92 Patentblatt 92/03**

(84) Benannte Vertragsstaaten:
**AT BE CH ES FR GB IT LI NL SE**

(56) Entgegenhaltungen:
**US-A- 2 854 143**
**US-A- 3 596 652**
**US-A- 3 731 806**
**US-A- 3 891 553**
**US-A- 4 483 825**

(73) Patentinhaber: **HOYER GMBH & CO.**
**Siemensstrasse 14**
**W-4040 Neuss 21(DE)**

(72) Erfinder: **Schlüter, Gert**
**Im Höfle 22**
**W-7803 Gundelfingen(DE)**

(74) Vertreter: **Patentanwälte Dipl.-Ing. W. Dahlke**
**Dipl.-Ing. H.-J. Lippert**
**Frankenforster Strasse 137**
**W-5060 Bergisch Gladbach 1(DE)**

## Beschreibung

Die Erfindung betrifft eine Vorrichtung zur Harnuntersuchung und insbesondere zur Untersuchung von Harnsedimenten.

Um krankhafte Prozesse im Harntrakt nachweisen bzw. im Anfangsstadium erkennen zu können, wird seit langem die sogenannte Sedimentanalyse durchgeführt. Dabei geht es vor allem darum, pathologische Bestandteile aus dem Harnsediment mikroskopisch zu erkennen und zu werten, um entsprechende Therapiemaßnahmen ergreifen zu können.

Im Harn von Gesunden finden sich Erythrozyten und Leukozyten in sehr geringer Menge. Eine Erhöhung dieser Blutzellen über experimentell bestimmte Grenzwerte hinaus gibt dann einen Hinweis auf entzündliche Prozesse oder andere Erkrankungen. Daneben können aber im Harn auch noch andere Zelltypen vorhanden sein, z.B. Nierenepithelien, Urothelzellen verschiedener Typen und im Frauenharn auch Plattenepithelzellen. Es finden sich außerdem Zylinder, Kristalle, Bakterien und andere. Da diese Bestandteile nun je nach Konzentration in einem unterschiedlichen Flüssigkeitsvolumen vorhanden sind, bringt ein direkt aus einer Gesamtprobe entnommener Tropfen Harn unter dem Mikroskop kein beurteilbares Ergebnis, weil im allgemeinen der Verdünnungsfaktor zu hoch ist. Eine quantitative Aussage neben einer morphologischen Untersuchung ist nur dann möglich, wenn eine Anreicherung der Partikel in der Flüssigkeit erfolgt. Eine Berechnung der Anzahl der jeweiligen Zellen je ml Harn ist nur dann möglich, wenn die Anreicherung oder Einengung exakt und standardisiert erfolgt.

Bisher hat man für eine solche Anreicherung eine Zentrifugation verwendet, wobei z.B. 10 ml Harn bei 2000 g zentrifugiert werden. Dan wird ein Überstand von 9 ml abdekantiert und das Sediment in 1 ml Restharn wieder suspendiert. Mit dieser Suspension wird dann eine Zählkammer, z.B. eine Fuchs-Rosenthal-Kammer gefüllt, die eine definierte Flüssigkeitsmenge aufnimmt. Die Partikel setzen sich dabei auf einem Gitternetz mit bestimmter Flächeneinteilung ab und werden nach der morphologischen Klassifizierung unter dem Mikroskop pro Flächeneinheit gezählt und auf 1 ml Harn hochgerechnet.

Es ist bekannt, daß bei der Zentrifugation Zellverluste von bis zu 40% auftreten, besonders bei Epithelzellen.

Auch das Abdekantieren ist mit großen Fehlern behaftet, da die hierfür erforderlichen Techniken eine gewisse manuelle Geschicklichkeit voraussetzen.

Alles in allem befriedigen die bisherigen Verfahren zur Einengung der Sediment-Teilchen auf ein kleineres Flüssigkeitsvolumen nicht, und der Erfindung liegt demnach die Aufgabe zugrunde, eine Vorrichtung zur Einengung auf einen definierten Bruchteil des ursprünglichen Flüssigkeitsvolumens und eine anschließende fehlerarme Zählung der einzelnen Teilchen unter dem Mikroskop zu ermöglichen.

Die eine solche Aufgabe lösende Vorrichtung soll in einfacher, schneller und sauberer Weise das Aufnehmen einer bestimmten, definierten Harnmenge aus einem Probenbehälter und anschließend eine Einengung der entnommenen Suspension auf einen vorbestimmten Bruchteil, vorzugsweise auf den zehnten Teil, ermöglichen. Dann soll aus dieser eingeengten Flüssigkeitsmenge ein Tropfen in eine Zählkammer eingebracht werden.

Zur Lösung dieser Aufgabe wird von einer durch die US-PS 4,483,825 bekannt gewordenen Pipette und zugehörigem Probenbehälter ausgegangen. Diese Druckschrift bezieht sich allerdings nicht auf eine Vorrichtung zur Harnuntersuchung, sondern um eine solche zur Blutuntersuchung. Die in dieser Druckschrift vorgeschlagene Pipette besitzt einen zylindrischen Hohlraum mit Kalibrierung und geht unterseitig in eine lang ausgezogene Pipettenspitze aus, während sie oberseitig mit einem Filter versehen ist und dort außerdem einen radial nach außen vorstehenden Dichtflansch aufweist. Wie aus Fig. 2 der vorgenannten Druckschrift zu erkennen ist, wird die Blutprobe in dem Teströhrchen 17 zunächst zentrifugiert, so daß sich der Blutkuchen 19 im unteren Teil des Teströhrchens absetzt, während das Plasma 20 darüber steht. Die Pipette 10 wird in das Teströhrchen eingeschoben, bis das Filter 15 die Oberfläche des Plasmas berührt. Bei weiterer Abwärtsbewegung strömt das Plasma durch das Filter 15, wobei noch verbliebene Festbestandteile im Filter festgehalten werden. Klares Plasma gelangt oberhalb des Filters in den Hohlraum 12 der Pipette. Schließlich kann das solcher Art gewonnene Plasma dadurch aus der Pipettenspitze 13 entnommen werden, daß man die Anordnung umdreht und die elastische Wand der Pipette mit den Fingern zusammendrückt.

Gemäß Fig. 3 bis 5 der genannten Druckschrift kann man die besagte Pipette auch in den zylindrischen Körper einer Injektionsspritze einsetzen, die an ihrem Ende mit einer Kanüle versehen ist. Bei vollständig eingeschobener Pipette wird dann die Kanüle in die Vene eingebracht und die gewünschte Blutprobe durch Herausziehen der Pipette aus der Injektionsspritze entnommen. Sodann wird die Kanüle abgenommen und die Öffnung der Injektionsspritze mit einer Kappe dicht verschlossen. Sodann wird das Blut durch Zentrifugieren in Blutkuchen und Plasma getrennt. Schließlich kann die Verschlußkappe vom anderen Ende der Pipette abgenommen und die Pipette langsam in den Körper der Injektionsspritze eingeführt werden. Dabei fließt das über dem Blutkuchen stehende Plasma durch das Filter und gelangt in gereinigter Form in die Pipette. Aus dieser kann es dann durch elastisches Zusammendrücken der Pipettenwand entnommen werden.

Mit der vorstehend beschriebenen bekannten Vorrichtung kann das vom Blutkuchen befreite Plasma gewonnen werden. Dazu ist eine Trennung des Blutes in Plasma und Blutkuchen durch Zentrifugieren erforderlich. Letzte Reste von Fibrin im Plasma werden dann von dem Filter zurückgehalten.

Diese Vorrichtung eignet sich nicht zur Untersuchung von festen Teilchen im Harn und insbesondere nicht zum Auszählen der im Harn enthaltenen kleinen Partikel. Ein Zentrifugieren würde ein Verklumpen dieser Teilchen bewirken und ihre Auszählung völlig unmöglich machen.

Die vorgenannte bekannte Vorrichtung dient vor allem nur zur Gewinnung der nach dem Zentrifugieren überstehenden Flüssigkeit und nicht der abgesetzten Festteile.

Zur Lösung der Aufgabe der Erfindung wird jedoch von der bekannten Vorrichtung ausgegangen, die einen rohrförmigen zylindrischen Probenbehälter aus transparentem Werkstoff, vorzugsweise Kunststoff, und einen in diesem frei verschiebbaren, rohrförmigen, zylindrischen Kolben umfaßt, wobei der Probenbehälter oberseitig offen ist und unterseitig in eine Pipettenspitze ausläuft und wobei der Kolben oberseitig offen und unterseitig durch eine Filteranordnung verschlossen ist. Bei dieser bekannten Vorrichtung handelt es sich allerdings, worauf ausdrücklich hingewiesen werden soll, nicht um eine Vorrichtung zur Harnuntersuchung, sondern um eine bekannte Vorrichtung, die hier zur Harnuntersuchung verwendet und weiterentwickelt werden soll.

Die vorgenannte Aufgabe wird durch eine solche Vorrichtung gelöst, bei der eine im Kolben oberhalb der Filteranordnung durch eine Querwand mit Mittelbohrung abgegrenzte Kammer vorgesehen ist. Diese Mittelbohrung ist so klein gehalten, daß beim Umkehren der Kammer darin enthaltene Harnflüssigkeit nicht ausläuft, sondern infolge Kapillarwirkung festgehalten wird. Ferner ist erfindungsgemäß eine abnehmbare Verschlußkappe für die Pipettenspitze des Probenbehälters und ein ihn oberseitig verschließender abnehmbarer Verschlußstopfen aus weichelastischem Kunststoff mit elastisch eindrückbarer Mittelwand vorgesehen. Ferner befindet sich eine Meßmarke an der Wand des Probenbehälters, die ein vorbestimmtes Flüssigkeitsvolumen definiert. Schließlich ist die Filteranordnung erfindungsgemäß nur für Harnflüssigkeit durchlässig, für die in dieser suspendierten festen Teilchen jedoch undurchlässig.

Gegenüber der bekannten Vorrichtung ist also bei der erfindungsgemäßen Vorrichtung neu eine Kammer oberhalb der Filteranordnung des Kolbens vorgesehen und durch eine Querwand mit Mittelbohrung abgegrenzt. Die in diese Kammer einströmende, von Festteilchen befreite klare Harnflüssigkeit stellt einen definierten Bruchteil der ursprünglich im Probenbehälter unterhalb der Filteranordnung enthaltenen Harnflüssigkeit dar und wird, wie nachstehend noch näher erläutert wird, wieder durch die Filteranordnung zurückgespült. Dabei nimmt sie die Festteilchen auf, die sich aber jetzt in einem verringerten Flüssigkeitsanteil befinden.

Weiterhin wird vorgeschlagen, daß von der Pipettenspitze des Probenbehälters eine Scheibe radial auswärts vorsteht und daß die Verschlußkappe mit einem Rollrand versehen ist, der sich beim Aufschieben auf die Pipettenspitze einwärts umlegt und die Verschlußkappe an der Scheibe verklammert.

In Weiterbildung der Erfindung wird vorgeschlagen, daß die Filteranordnung zwei hintereinandergeschaltete Filter verschiedener Porenweite aufweist.

Vorzugsweise ist außerdem noch ein drittes Filter vorgesehen, das eine größere Porenweite als die beiden vorgenannten Filter besitzt.

Schließlich wird vorgeschlagen, daß sich zwischen den beiden ersten Filtern und dem dritten Filter ein zylindrischer Rohrstutzen befindet, der eine zweite Rückspülkammer bildet.

Die Vorrichtung wird nachstehend in einem Ausführungsbeispiel anhand der Zeichnung näher erläutert. Dabei zeigen::

Fig. 1 einen Schnitt durch eine erfindungsgemäße Vorrichtung, bestehend aus Probenbehälter, eingeschobenem Kolben mit Filtervorrichtung und Kammer;

Fig. 2 einen Verschlußstopfen für den Probenbehälter nach Entfernen des Kolbens;

Fig. 3 das untere Ende des Probenbehälters und eine dafür vorgesehene Verschlußkappe und

Fig. 4 eine Darstellung entsprechend Fig. 3 mit aufgesetzter, verklammerter Verschlußkappe.

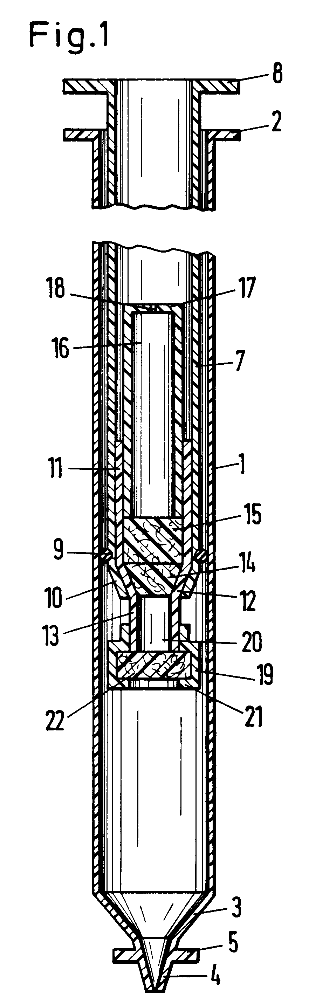

Die in Fig. 1 dargestellte Vorrichtung umfaßt einen zylindrischen Probenbehälter 1 mit oberem Flansch 2, unterem, trichterförmig verjüngtem Ende 3, einer daran anschließenden Pipettenspitze 4 und außen von dieser Spitze vorstehend eine Scheibe 5, deren Zweck sich nachstehend ergeben wird.

Im Mantel des Probenbehälters 1 befindet sich (nicht dargestellt) eine Meßmarke für 10 ml.

In den Probenbehälter 1 ist ein zylindrischer rohrförmiger Kolben 7 eingeschoben, der an seinem oberen offenen Ende ebenfalls einen nach außen weisenden Flansch 8 besitzt.

In der Nähe seines unteren Endes trägt dieser Kolben 7 auf seinem Umfang eine Dichtungsring 9 aus Weichgummi. Der Kolben ist zügig innerhalb des Probenbehälters verschiebbar, wobei der Dichtungsring 9 jedoch für eine flüssigkeitsdichte und luftdichte Abdichtung sorgt.

Der Kolben 7 ist an seinem unteren Ende bei 10 etwas verjüngt. An dieser trichterförmigen Verjüngung stützt sich ein ebenfalls konisch verjüngter Teil 12 eines in den Kolben 7 eingeschobenen, im oberen Teil zylindrischen Rohrstücks 11 ab. Unterhalb der trichterförmigen Verjüngung setzt sich dieses Rohrstück in einem kurzen zylindrischen Teil 13 fort.

Das Rohrstück 11 dient zur Aufnahme einer zweiteiligen Filtervorrichtung, bestehend aus den Einzelfiltern 14 und 15. Das eine dieser beiden Filter ist engmaschiger als das andere. Dabei kann das engere Filterstück entweder unten oder oben eingesetzt werden.

Das obere Filterstück 15 wird durch einen in das Rohrstück 11 von oben nachgeschobenen Zylinder 17 festgehalten. Dieser Zylinder besitzt an seinem oberen Ende eine Querwand mit einer feinen Mittelbohrung 18 und umgrenzt einen Innenraum 16, der als Rückspülkammer bezeichnet wird. Die Öffnung 18 ist so klein gehalten, daß Flüssigkeiten der hier in Betracht kommenden Art, also Harn, beim Umkehren eines damit gefüllten Zylinders 17 nicht von selbst auslaufen können, sondern infolge Kapillarwirkung festgehalten werden.

Unterhalb des zylindrischen Teiles 13 befindet sich, in einer aufgeschobenen Kappe 19 mit durchbohrtem Boden 21, ein weiteres Filterstück 22.

Durch diese Kombination verschiedener Filter in Verbindung mit der oberen Rückspülkammer 16 und der unteren Rückspülkammer 20 läßt sich die Einengung, die nachstehend beschrieben wird, besonders vorteilhaft durchführen.

Die einzelnen Filterstücke 15, 14 und 22 bestehen vorzugsweise aus Fasern mit walzenförmigem Querschnitt, entweder aus Kunststoff, wie Polyamid oder Polyester, oder auch aus Glas. Diese Fasern werden unter Hinzugabe eines Bindemittels, das aber nicht sämtliche Hohlräume ausfüllt, verpreßt und verdichtet und das gesamte Faserbündel in einem abschließenden Tauchvorgang noch zusätzlich mit einem weiteren Kunststoff getränkt.

Es soll noch erwähnt werden, daß sowohl der Probenbehälter 1 als auch der Kolben 7 und die Zylinder 11 und 17 aus einem transparenten Kunststoff hergestellt wurden.

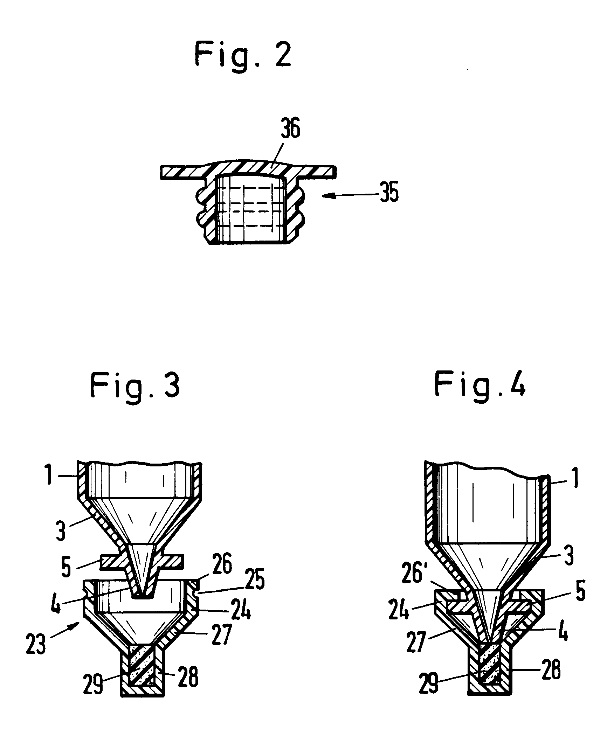

Der in Fig. 2 dargestellte Verschlußstopfen 35 dient zum Verschließen des offenen oberen Endes des Probenbehälters 1, innerhalb seines Flansches 2, und besitzt folgende Besonderheit: Der Mittelteil dieses Verschlußstopfens ist nach oben ausgewölbt und so dünn gehalten, daß der aus einem weichelastischen Kunststoff bestehende Verschlußstopfen 35 ein Eindrücken dieser Mittelwand 36 gestattet. Der Zweck wird nachstehend noch beschrieben.

In den Figuren 3 und 4 ist die Verschlußkappe 23 für die Spitze 4 am unteren Ende des Probenbehälters 1 dargestellt, und zwar in Fig. 3 im abgenommenen und in Fig. 4 im aufgesetzten Zustand.

Wie man sieht, ist diese Kappe an ihrem oberen Rand aus zwei Ringteilen 24 und 26 mit einer dazwischenliegenden äußeren Rille 25 ausgebildet, und zwar so, daß beim Aufsetzen der Verschlußkappe der obere Ringteil 26 einwärts in die in Fig. 4 dargestellte Lage 26' umklappt und die Verschlußkappe nach Art eines Rollverschlusses an der Spitze 4 bzw. dem trichterförmigen Ende 3 des Probenbehälters 1 festhält.

Um die unten offene Spitze 4 in dieser Lage (Fig. 4) dicht zu verschließen, befindet sich in einem zylindrischen Sackteil 28 der Verschlußkappe ein Dichtungsstopfen 29 aus Weichgummi.

Die Arbeitsweise mit dieser Vorrichtung besteht aus folgenden Schritten:

a) Einschieben des Kolbens 7 in den Probenbehälter 1 bei abgenommener Verschlußkappe 23;

b) Verschließen des Kolbens 7 mit dem Verschlußstopfen 35;

c) Eintauchen der Spitze 4 des Probenbehälters 1 in eine vorher aufgewirbelte Harnprobe;

d) Herausziehen des Kolbens 7, bis der eingesaugte Harn mit seiner Flüssigkeitsoberkante die Marke "10 ml" des Probenbehälters 1 erreicht;

e) Verschließen der Spitze 4 des Probenbehälters 1 mittels der Verschlußkappe 23 und Entfernen des Verschlußstopfens 35 vom oberen Ende des Kolbens 7;

f) langsames und gleichmäßiges Einschieben des Kolbens 7 bis ganz in den Probenbehälter 1 hinein;

g) einmaliges Umkehren des Probenbehälters 1 mit eingeschobenem Kolben 7, um den überstehenden Harn abzugießen, der verworfen wird, und dann wieder Umkehren;

h) langsames Herausziehen des Kolbens 7 aus dem Probenbehälter 1, bis sich aller Harn in der Spitze 4 und dem darüber befindlichen Raum 3 des Probenbehälters 1 befindet;

i) vollständiges Herausziehen des Kolbens 7 aus dem Probenbehälter 1 und Verwerfen des Kolbens;

k) Verschließen des Probenbehälters 2 oberseitig durch den Verschlußstopfen 35;

l) Umdrehen des Probenbehälters 1 und Belüften des Innenraums durch Abnehmen der Verschlußkappe;

m) abermaliges Umdrehen des Probenbehälters 1 mit der Spitze 4 nach unten, Führen der Spitze 4 über die Kammer in einem Objektträger;

n) Ausüben eines leichten, kurzen Drucks auf die Mitte des Verschlußstopfens 35 zur Abgabe einer zur Füllung der Zählkammer aureichenden Harnmenge in diese.

**Patentansprüche**

1. Vorrichtung zur Harnuntersuchung, die einen rohrförmigen, zylindrischen Probenbehälter (1 ) aus transparentem Werkstoff, vorzugsweise Kunststoff, und einen in diesem frei verschiebbaren, rohrförmigen, zylindrischen Kolben (7) umfaßt, wobei der Probenbehälter oberseitig offen ist und unterseitig in eine Pipettenspitze (4) ausläuft und wobei der Kolben oberseitig offen und unterseitig durch eine Filteranordnung verschlossen ist, **gekennzeichnet durch** eine im Kolben (7) oberhalb der Filteranordnung durch eine Querwand mit Mittelbohrung (18) abgegrenzte Kammer (16), wobei diese Mittelbohrung (18) so klein gehalten ist, daß beim Umkehren der Kammer (16) darin enthaltene Harnflüssigkeit nicht ausläuft, sondern infolge Kapillarwirkung festgehalten wird, ferner gekennzeichnet durch eine abnehmbare Verschlußkappe (23) für die Pipettenspitze (4) des Probenbehälters (1), ferner gekennzeichnet durch einen den Probenhälter (1) oberseitig verschließenden, abnehmbaren Verschlußstopfen (35) aus weichelastischem Kunststoff mit elastisch eindrückbarer Mittelwand (36), ferner gekennzeichnet durch eine Meßmarke an der Wand des Probenbehälters, die ein vorbestimmtes Flüssigkeitsvolumen definiert, und schließlich dadurch gekennzeichnet, daß die Filteranordnung nur für Harnflüssigkeit durchlässig, für die in dieser suspendierten festen Teilchen jedoch undurchlässig ist.

2. Vorrichtung nach Anspruch 1, **dadurch gekennzeichnet,** daß von der Pipettenspitze (4) des Probenbehälters (1 ) eine Scheibe (5) radial auswärts vorsteht und daß die Verschlußkappe (23) mit einem Rollrand (26) versehen ist, der sich beim Aufschieben auf die Pipettenspitze einwärts umlegt und die Verschlußkappe (23) an der Scheibe (5) verklammert.

3. Vorrichtung nach Anspruch 1, **dadurch gekennzeichnet,** daß die Filteranordnung zwei hintereinander geschaltete Filter (14, 15) verschiedener Porenweite aufweist.

4. Vorrichtung nach Anspruch 1, **dadurch gekennzeichnet,** daß die Filteranordnung zwei hintereinander geschaltete Filter (14, 15) verschiedener Porenweite und ein drittes Filter (22) größerer Porenweite als die beiden vorgenannten Filter (14, 15) aufweist.

5. Vorrichtung nach Anspruch 1, **dadurch gekennzeichnet,** daß die Filteranordnung zwei hintereinander geschaltete Filter (14, 15) verschiedener Porenweite und ein drittes Filter (22) größerer Porenweite als die beiden vorgenannten Filter (14, 15) aufweist und daß sich zwischen den beiden ersten Filtern (14, 15) und dem dritten Filter (22) ein zylindrischer Rohrstutzen (13) befindet, der eine zweite Kammer (20) bildet.

**Claims**

1. Device for urine analysis, which contains a turbular, cylindrical specimen container (1) of trasparent material, preferable synthetic material and a slideable, turbular, cylindrical plunger (7) which is located inside, whereby the specimen container is open at the top and at the bottom emties into a pipette tip (4) and whereby the plunger is open on the top and bottom sealed by a filter arrangement, characerized in a, inside the plunger arranged demarcated chamber, which is located above the filter arragement through a transverse wall with a center bore, whereby the center bore is to small that, while turning round the chamber the urine liquid held inside cannot leak, but is held as a result of capillary action, further characterized in a detachable sealing cap (23) for the pipette tip (4) of the specimen container (1) further characterized in a detachable stopper (35) which seals the specimen container (1) at the top and is out of flexible synthetic material with an elastic pressable center wall (36), further characterized in a measuring mark on the circumference of the specimen container, which defines a in advance determined liquid volume and finally characterized in that the filter arrangement only leaks the urine liquid for which however in this suspended firm particles is leakproof.

2. Device according to claim 1, characterized in that a disc (5) projects radially outwards from the pipette tip (4) of the specimen container (1), and in that the sealing cap (23) is provided with a rolled edge (26) which, when pushed onto the pipette tip, turns inwards and clamps the scaling cap (23) on the disc (5).

3. Device according to claim 1 , characterized in the filter arrangement has two filters (14, 15) connected inseries and of different pore size.

4. Device according to claim 1, characterized in that the filter arrangement has two filters (14, 15) connected in series and of different pore size and a third filter (23) of larger pore size than the two above mentioned filters (14, 15).

5. Device according to claim 1, characterized in that the filter arrangement has two filters (14, 15) connected in series and of different pore size and a third filter (22) of larger pore size than the two above mentioned filters (14, 15), and in that between the first two filters ( 14, 15) and the third filter (22) there is a cylindrical tube support (13) which forms a second back flush chamber (20).

**Revendications**

1. Dispositif pour l'analyse d'urine, comprenant une éprouvette cylindrique tubulaire (1) en matériau transparent, matière plastique de préférence, et un piston cylindrique tubulaire (7) pouvant coulisser librement dans cette éprouvette, l'éprouvette étant ouverte du côté supérieur et se terminant du côté inférieur en un bout de pipette (4), et le piston étant ouvert du côté supérieur et fermé du côté inférieur par un ensemble filtrant, **caractérisé** par une chambre (16) qui est délimitée au-dessus de l'ensemble filtrant dans le piston (7) par une paroi transversale pourvue d'un perçage central (18), ce perçage central (18) étant tellement petit que, lors du retournement de la chambre (16), l'urine liquide qui y est contenue ne s'échappe pas, mais reste bloquée par effet capillaire, caractérisé également par un capuchon de fermeture amovible (23) pour le bout de pipette (4) de l'éprouvette (1), caractérisé également par un bouchon de fermeture amovible (35), en matière plastique molle, fermant du côté supérieur l'éprouvette (1) et pourvu d'une paroi centrale (36) pouvant être élastiquement enfoncée, caractérisé également par un repère de mesure sur la paroi de l'éprouvette, qui définit un volume de liquide prédéterminé, et caractérisé enfin en ce que l'ensemble filtrant laisse uniquement passer l'urine liquide, mais non les particules solides en suspension dans cette dernière.

2. Dispositif selon la revendication 1, caractérisé en ce qu'une rondelle (5) dépasse radialement vers l'extérieur du bout de pipette (4) de l'éprouvette (1), et en ce que le capuchon de fermeture (23) est pourvu d'un collet marginal (26) qui se rabat vers l'intérieur lors de l'enfilage sur le bout de pipette, et bloque le capuchon de fermeture (23) contre la rondelle (5).

3. Dispositif selon la revendication 1, caractérisé en ce que l'ensemble filtrant présente deux filtres (14,15) de tailles de pores différentes, montés l'un à la suite de l'autre.

4. Dispositif selon la revendication 1, caractérisé en ce que l'ensemble filtrant présente deux filtres (14,15) de tailles de pores différentes, montés l'un à la suite de l'autre, et un troisième filtre (22) de taille de pores supérieure à celle des deux filtres précités (14,15).

5. Dispositif selon la revendication 1, caractérisé en ce que l'ensemble filtrant présente deux filtres (14,15) de tailles de pores différentes, montés l'un à la suite de l'autre, et un troisième filtre (22) de taille de pores supérieure à celle des deux filtres précités (14,15), et en ce qu'une tubulure cylindrique (13) se trouve entre les deux premiers filtres (14,15) et le troisième filtre (22), et forme une seconde chambre (20).

# Fig.1

# Fig. 2

# Fig. 3

# Fig. 4